# EUROPÄISCHE PATENTSCHRIFT

(11) **EP 0 767 312 B1**
(45) Veröffentlichungstag und Bekanntmachung des Hinweises auf die Patenterteilung: **26.08.1998**
(21) Anmeldenummer: 95101356.4
(22) Anmeldetag: 01.03.1995
(51) Int. Cl.: F16B 5/06, F16B 12/46, C05F 17/02

(54) **Kompostsilo mit einer Klemmvorrichtung für Eckverbindungen**
Compost silo with a clamping device for corner connections
Caisse à compost comprenant un dispositif de serrage en coin

(43) Veröffentlichungstag der Anmeldung: 09.04.1997
(73) Patentinhaber: Hohmann Herstellungs- und Vertriebs-GmbH, D-96317 Kronach-Dörfles (DE)
(72) Erfinder: Hohmann, Roland, D-96317 Kronach (DE)

(56) Entgegenhaltungen:
- AT-B- 383 590
- DE-A- 2 252 377
- DE-U- 9 013 312
- FR-A- 912 176
- FR-A- 928 164

## Beschreibung

Die Erfindung betrifft einen Kompostsilo entsprechend dem Oberbegriff nach Anspruch 1.

Es gibt bereits verschiedene Systeme von Kompostsilos wie z. B. DE-U-9 013 312, dessen Aufbau und Zusammenhalt aus Holzlatten oder Kunststoff oder Metall besteht. Nachteilig bei diesem bekannten Silo ist, daß dessen Konstruktion und Aufbau aufwendig ist.

Aus der Schrift FR-A-912 176 ist eine Klemmvorrichtung für Eckverbindungen bekannt, bei der Profilleisten als Eckverbindung miteinander verspannt werden, wobei mit Durchgangbohrungen versehene Einsatzstücke verwendet werden, an die die zu verbindenden Bretter mit ihrer Stirnseite anliegen.

Aufgabe der Erfindung ist es einen Kompostsilo zu schaffen, der mittels einer Klemmvorrichtung für Eckverbindungen ohne zusätzliche Einsatzstücke einfach und kostengünstig herzustellen ist und trotzdem stabil ist.

Diese Aufgabe wird durch einen Kompostsilo mit den Merkmalen nach Anspruch 1 gelöst. Anspruch 2 betrifft bevorzugte Ausführungsarten des Kompostsilos nach Anspruch 1.

Bevorzugte Ausführungsformen sind in den Zeichnungen Blatt 1/3-3/3 und nachfolgenden Beschreibung dargestellt:

Dieser Kompostsilo umfasst eine massive Eckverbindung für Materialien aus Holz, Kunststoff, Metall oder anderen vergleichbaren Materialien.

Dabei ist kein Schweißen, Nageln, Leimen erforderlich.

### Konstruktion des Kompostsilos:

Ein Vierkantstab in beliebigem Format: Länge/Breite/Höhe, aus beliebigem Material, wird diagonal, längs, geteilt, so daß 2 Dreiecke entstehen.

An der Längsseite des Dreieckstabes werden im beliebigem Abstand am unteren und oberen Ende, je eine Bohrung in beliebigem Durchmesser angebracht.
Die Bohrungen sind so angeordnet, daß diese direkt auf der Kante an der Spitze des Dreieckes, herausführt ( siehe Skizze Nr. 1).
Es werden 2 Dreieckstäbe mit der Spitze zueinander liegend, mittels Schrauben und Muttern verbunden, wobei ein Spalt in der jeweiligen Brettdicke, zwischen den beiden Dreieckleisten offen bleibt.
Zwischen diesen beiden Dreieckleisten werden die Latten bzw. Bretter, kreuzweise versetzt, mit den Enden eingelegt. ( siehe Skizze Nr. 1 ,Nr.2 und Nr.3.)

Die Befestigungsschrauben werden festgezogen. Der Behälter ist stabil. Es können quadratische, rechteckige oder dreieckige Behälter hergestellt werden.

Die Klemmvorrichtung kann jederzeit gelöst werden, ohne die Latten zu zerstören. Der Behälter kann demontiert und wieder montiert werden. Hilfsweise kann anstatt einer Dreieckleiste, auch eine Rundleiste, Vierkantleiste, oder anders formatige Leiste für die Klemmvorrichtung verwendet werden.

### Montage des Klemm - Fix - Kompostsilos:

2 Dreieckleisten werden mit der Spitze zueinander liegend zusammengeschraubt, so daß eine Klemmvorrichtung entsteht. Es werden pro Kompostsilo 4 Stück Klemmvorrichtungen benötigt. Zwischen den Klemmvorrichtungen werden jeweils versetzt, die Latten/Bretter eingelegt. (siehe Skizze Nr. 1 Nr.2 und Nr. 3) Am unteren Ende wird mit 2 schmalen Latten begonnen, die sich gegenüberliegen. Danach werden die breiten Latten/Bretter, jeweils versetzt eingelegt. Am oberen Ende werden 2 schmale Latten zum Ausgleich eingelegt, Diese Latten liegen sich wiederum gegenüber. Zwischen den Latten entsteht ein Zwischenraum. Hierdurch wird eine Luftzirkulation erreicht, welche für die Kompostierung erforderlich ist.

Nach dem Einlegen der Latten/Bretter in die Klemmvorrichtung, wird die Klemmvorrichtung mittels Befestigungsschrauben zusammengezogen. Die Höhe, Breite, Länge des Behälters/Kompostsilos ist beliebig gestaltbar.

Zur Entnahme des Kompostes, kann problemlos eine oder mehrere Latten aus der Klemmvorrichtung entnommen werden.
Dabei werden die Befestigungsschrauben etwas gelöst und die Latten werden seitlich herausgeschoben.

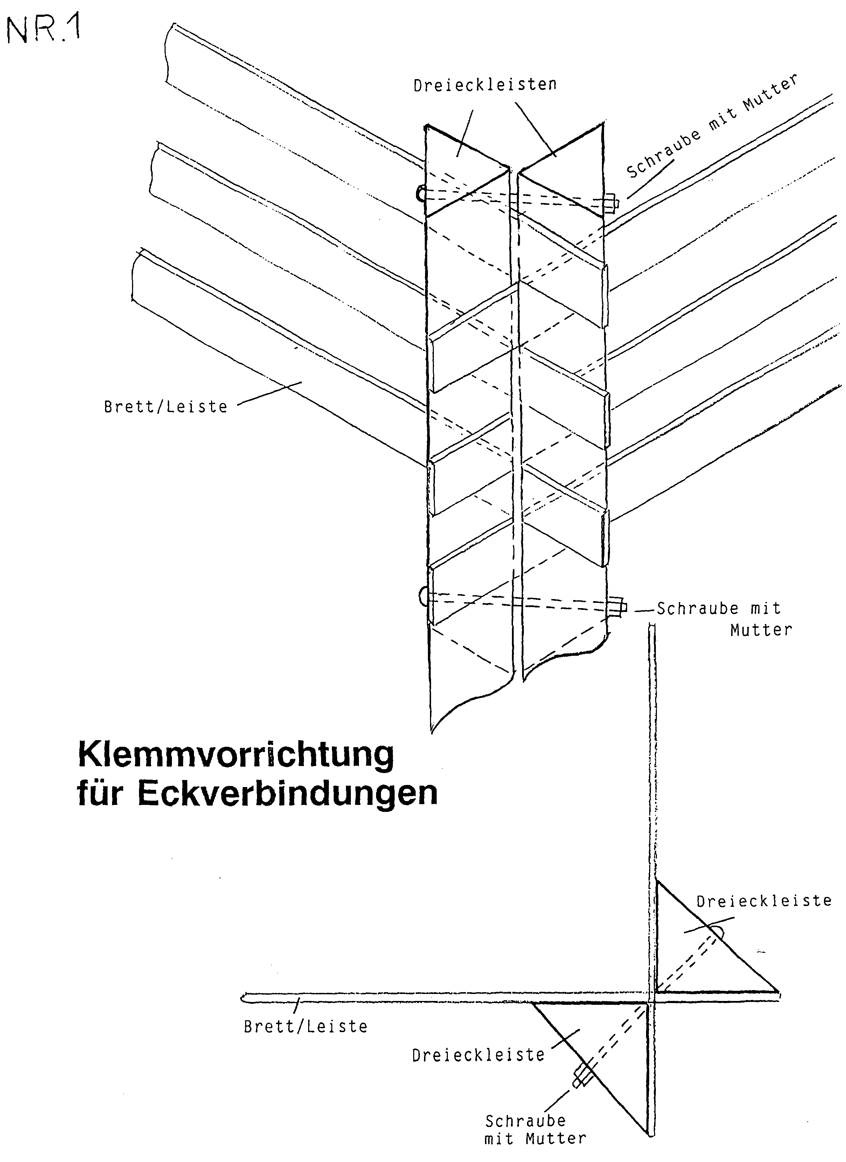

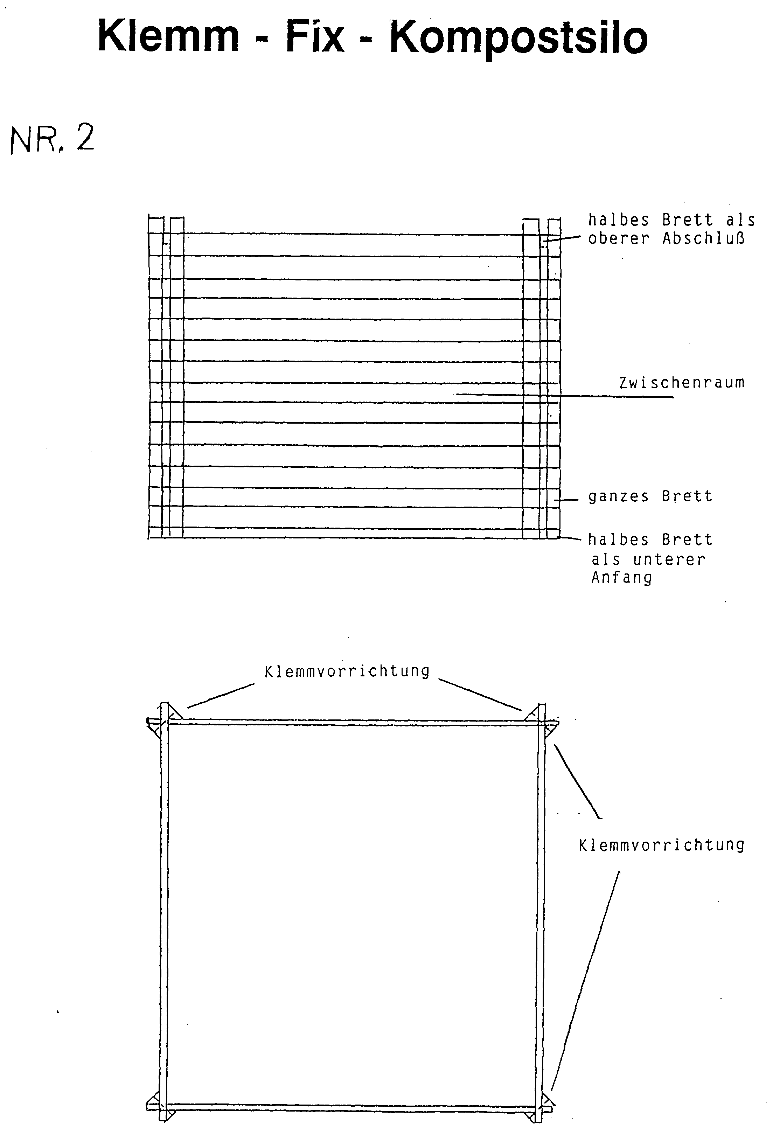

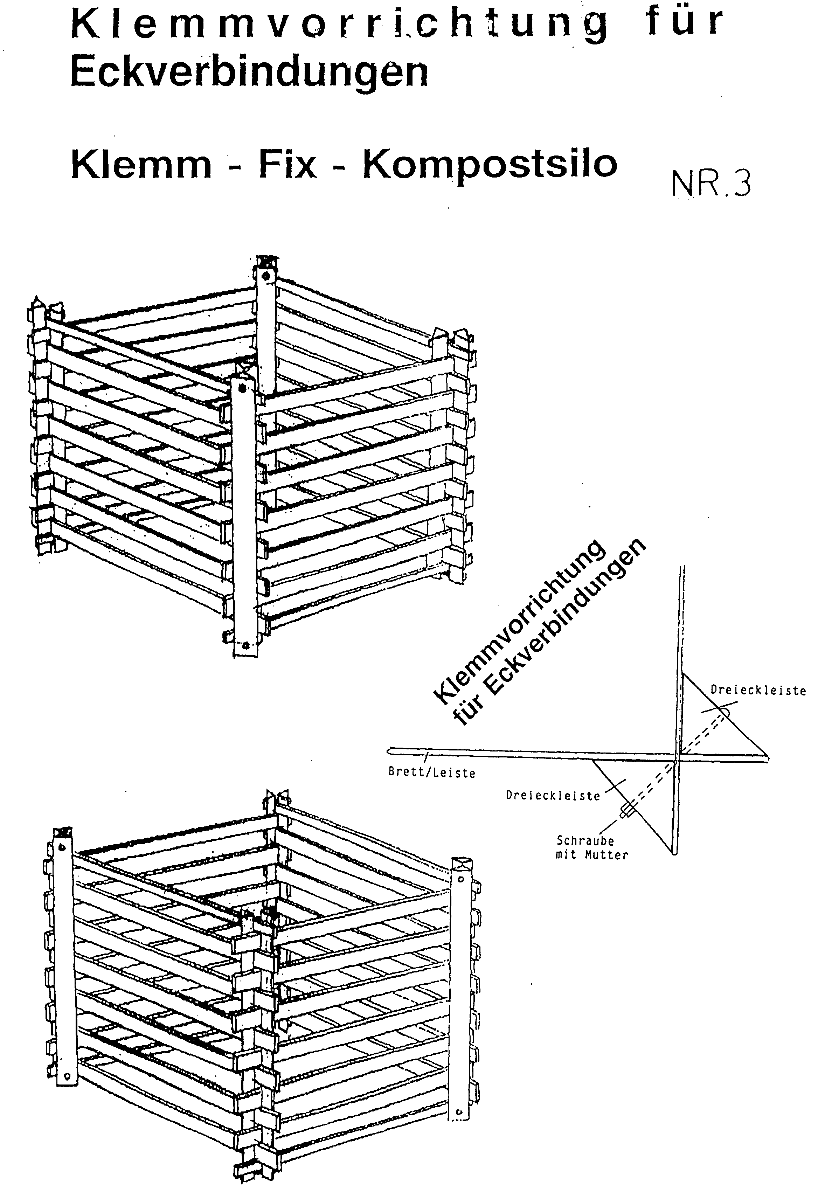

## Patentansprüche

1. Kompostsilo bestehend aus senkrecht angeordneten Leisten und an diesen mit einem Zwischenraum zueinander angeordneten Latten bzw. Bretter, bestehend aus Holz, Kunststoff , Metall oder ähnlichen Materialien,
**dadurch gekennzeichnet daß**
an den Längsseiten der Leisten, am unteren und oberen Ende, je eine Bohrung angebracht ist,
jeweils zwei Leisten nebeneinander liegend angeordnet sind, so daß die Bohrungen zueinander fluchtend sind,
die Leisten, mittels Schrauben und Muttern verbunden sind, wobei ein Spalt in der jeweiligen Latten- bzw. Brettdicke, zwischen den beiden Leisten offen bleibt,
zwischen diesen beiden Leisten die Latten bzw. Bretter, kreuzweise versetzt, an ihren Enden eingelegt sind.

2. Kompostsilo nach Anspruch 1 **dadurch gekennzeichnet daß** die Leisten in Form einer Dreieckleiste, oder einer Rundleiste, oder Vierkantleiste sind.

## Claims

1. Compost silo composed of horizontal ledges on which laths or boards are arranged with some empty space between them, made of wood, plastic, metal or similar materials,
**distinguished by**
a drill hole on the low and upper edge of the ledges long sides,
the fact that always two ledges are arranged lying side by side, so that the drill holes are in line with each other,
the fact that the ledges are fixed with screws and nuts, leaving a gap in the respective thickness of the laths or boards between the two ledges,
the fact that the laths or boards are arranged crosswise staggered between and on the edges of these two ledges.

2. Compost silo which is distinguished according to claim 1 by the fact that the ledges are in the form of a triangular ledge or a round ledge or a square ledge.

## Revendications

1. Silo compost composé de listeaux disposés verticalement et de lattes ou planches qui y sont arrangées avec des distances entre elles consistant en bois, plastique, métal ou en un matérial semblable,
**se caractérise par**
une forure au bout supérieure et au bas bout du grand côté des listeaux,
le fait que chaque fois deux listeaux sont placés l'un à côté de l'autre ce qui a pour résultat que les forures ont à l'alignement une à l'autre,
le fait que les listeaux sont liés avec vis (ohne Muttern; boulons = mit Muttern) et écrous d'une telle manière qu'il y reste une fente entre les deux listeaux dans l'épaisseur des lattes ou planches,
le fait que les lattes ou planches sont mis entre ces deux listeaux, à savoir à leurs bouts, tout en étant déplacées en forme de croix,

2. Silo compost qui se caractérise selon exigence 1 par le fait que les listeaux sont sous forme d'un listeau triangulaire, d'un listeau rond ou d'un listeau carré.
